# EUROPEAN PATENT APPLICATION

(11) **EP 3 462 739 A1**
(43) Date of publication of application: **03.04.2019**
(21) Application number: 17194205.5
(22) Date of filing: 29.09.2017
(51) Int. Cl.: H04N 19/467, G06T 1/00, H04N 1/32

(54) **METHOD, SYSTEM AND COMPUTER PROGRAM FOR VISIBLE LIGHT COMMUNICATION**

(71) Applicant: Vestel Elektronik Sanayi ve Ticaret A.S., 45030 Manisa (TR)
(72) Inventor: ÍKIZLER,, Anil, 45030 Manisa (TR); YILDIZ,, Özgür, 45030 Manisa (TR)
(74) Representative: Flint, Adam

(57) **Abstract**

Visible light communication information is encoded in a video formed of a sequence of frames. The frames of the video are analysed to determine an indication of an brightness level of the frames. An amount of information to encode for visible light communication in the respective frames is selected for the analysed frames in dependence upon the determined indication of brightness level in the respective frames. The selected amount of information for visible light communication is encoded in the respective frames.

## Description

### Technical Field

The present disclosure relates to a method, system and computer program for encoding visible light communication information in a video.

### Background

Screens and cameras are commonplace, not only in televisions and computers, such as laptop, tablet, personal computers, etc. but also in smart devices such as smartphones, smart watches, and smart glasses. Visible light communication is a data communications technique that uses visible light to convey data. In recent years, visible light communication between screens and cameras has been attracting growing interest. In this case, information is embedded in a video transmission, which is then received by a camera and decoded.

One example of embedding information (e.g. a URL) into a video transmission is the QR code, in which information is encoded in a matrix barcode which is displayed as part of the video. One drawback of the use of such a barcode (or of other types of coded image) is that it is visible to users who are observing the screen. This may make for a less pleasant viewing experience by, for example, obfuscating additional information or images that are displayed on the screen. Arrangements for visible light communication that does not interfere with the user's view of the screen are known, but are not efficient or have high bit error rates.

### Summary

According to a first aspect disclosed herein, there is provided a method for encoding visible light communication information in a video formed of a sequence of frames, the method comprising:
analysing frames of the video to determine an indication of a brightness level of the frames;
selecting for the analysed frames an amount of information to encode for visible light communication in the respective frames in dependence upon the determined indication of brightness level in the respective frames; and
encoding the selected amount of information for visible light communication in the respective frames.

In an example, the method comprises:
in response to determining that the brightness level of a frame is below a threshold, not encoding any information for visible light communication in the frame.

In an example, the method comprises:
in response to determining that the brightness level of a frame is above a threshold, encoding information for visible light communication in the frame.

In an example, the selected amount of information to encode for visible light communication in the frames varies monotonically with the determined indication of the brightness level of the frames.

In an example, the information is encoded by varying a property of tiles of a grid shown in one or more frames of the video.

In an example, the property comprises transparency of the tiles.

In an example, selecting an amount of information to encode for visible light communication comprises selecting a number of tiles for display on the grid.

In an example, the number of tiles for display on the grid varies monotonically with the determined indication of the brightness level.

In an example, the determining the indication of the brightness level comprises determining a histogram of brightness levels of the frames of the video.

In an example, the determined indication of the brightness level comprises an average picture level of the at least one frame of the video.

In an example, analysing a frame of the video is carried out prior to the display of the frame.

According to a second aspect disclosed herein, there is provided a system for encoding visible light communication information in a video formed of a sequence of frames, the system comprising at least one processor and at least one memory including computer program code, the at least one memory and the computer program code configured to, with the at least one processor, cause the system at least to:
analyse frames of the video to determine an indication of a brightness level of the frames;
select for the analysed frames an amount of information to encode for visible light communication in the frames in dependence upon the determined indication of brightness level in the respective frames; and
encode the selected amount of information for visible light communication in the frames.

According to a third aspect disclosed herein, there is provided a computer program for encoding visible light communication information in a video, the computer program comprising instructions such that when the computer program is executed on a computing device, the computing device is arranged to:
select for the analysed frames an amount of information to encode for visible light communication in the frames in dependence upon the determined indication of brightness level in the respective frames; and
encode the selected amount of information for visible light communication in the frames.

### Brief Description of the Drawings

To assist understanding of the present disclosure and to show how embodiments may be put into effect, reference is made by way of example to the accompanying drawings in which:
Figure 1 shows an example of how information may encoded into a frame of a video;
Figure 2 shows schematically an example of a system for visible light communication using a video as described herein;
Figure 3 shows an example of how the amount of data encoded into a stream of frames may be varied with the brightness level of the frames;
Figure 4 shows an example of how sets of frames may change during a video;
Figure 5 shows an example diagram of a system according to examples of the application;
Figure 6 shows an example of the production of histograms for different frames; and
Figure 7 shows a method according to examples of the application

### Detailed Description

As mentioned earlier, one particular known model that can be implemented for incorporating visible light communication into a video is the use of a matrix barcode, such as a QRcode. However, the display of the information in this form will often interfere with the user's viewing experience of the video, by obscuring information shown in the video.

One known proposal to address this issue is to embed information in the carrier image as random background noise.

Another known proposal is to embed data in a small barcode (a "Bokode") into a video, and then to use a special lens setup to capture this data using an out-of-focus camera.

Another known proposal is to use colour shifting based steganography for VLC. Since there is a mismatch in human and camera spectral sensitivity, hidden messages can be incorporated into a video by shifting the base colour along a particular colour gradient. The colour shift is of a degree that the information is decipherable by cameras, but camouflaged to human vision.

Another known proposal is to make use of the psychovisual redundancy of a signal having a refresh rate of over 60Hz to present different videos for different viewers. By doing so, it is possible to incorporate additional information into a video that may not be viewable to every viewer of the video.

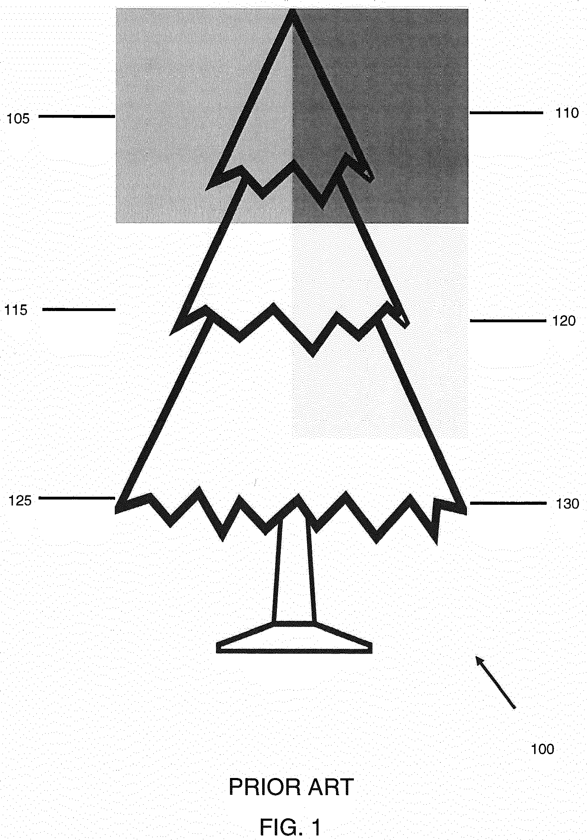

Another known proposal is to show on the screen a grid that is transparent by default, and to vary the transparency of the grid so as to encode information onto the grid. Reference is made to Figure 1, which schematically illustrates this technique. This Figure shows an example of a frame of a video that may be displayed on a screen. A grid is superimposed on an underlying image. A first tile/element 105 of the grid has a transparency level of 80%. The second tile/element 110 has a transparency level of 50%. The third tile/element 115 has a transparency level of 99%. The fourth tile/element 120 has a transparency level of 98%. The fifth tile/element 225 has a transparency level of 100%. The sixth tile/element 230 has a transparency level of 100%.

The first tile 105 and second tile 110 have transparency levels that are low enough that they are clearly visible to a viewer of the screen. These are shown in the Figure so as to illustrate the use of the grid. However, to achieve the advantage that visible light communication is not detectable by a user, it is desirable to use higher transparency levels. The third tile 115 and fourth tile 120 tiles have transparency levels that are high enough that they may be undetectable to a human observing the screen but are detectable by a camera and a decoder.

In one example, the tile 115 having a transparency level of 99% may represent a bit having a value of "1" whereas the tile 120 having a transparency level of 98% may represent a bit having a value of "0". A decoder can receive the frame 100 of the video and decode the information contained therein. The transparency of the tiles on the grid may change from frame to frame, so as to transmit information over the time duration of the video.

Although in the grid, six tiles are shown, it will be appreciated that other numbers of tiles may be used. By using a larger number of tiles in the grid, with each tile being smaller, the data transmission rate of the visible light communication may be increased. However, this may lead to a higher bit error rate.

One of the problems associated with some of these proposals, e.g. the Bokode and AiD, is that they require custom hardware. Another problem is that the bit error rate is often higher than is desirable. This is often the case when the underlying image displayed on the screen is relatively dark, i.e. has a lower brightness level. Furthermore, the bit error rate typically increases as the information density increases.

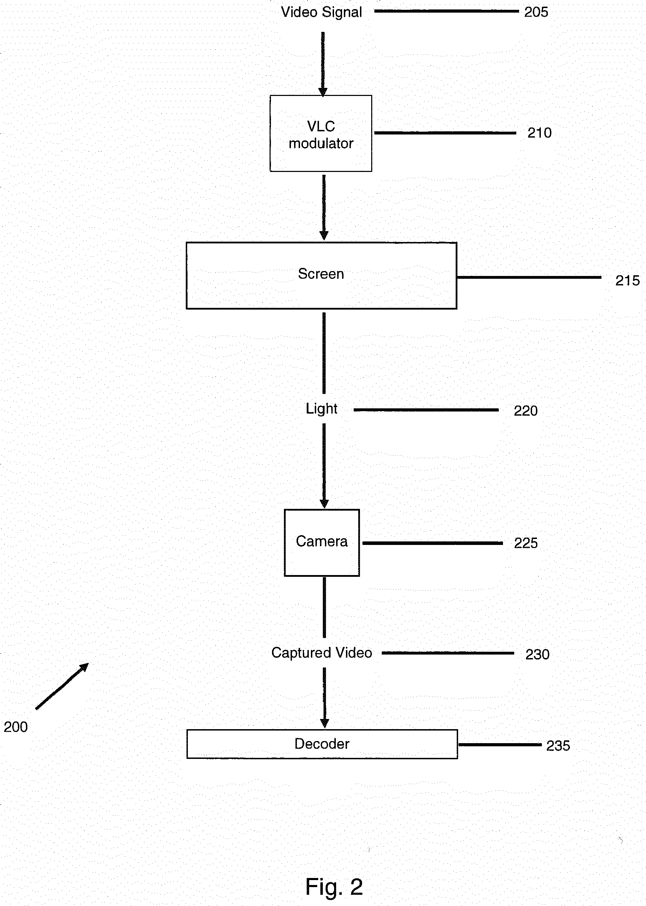

Reference is now made to Fig. 2, which shows an example of a system 200 for providing virtual light communication in a video, which is observable on a screen 215 by one or more viewers (not shown) and one or more cameras 225225. A video signal 205 is received by the system 200. The video signal 205 is passed to the visible light communication (VLC) modulator 210 at which the signal is modified to encode information. As will be discussed, below different methods are available for encoding information in the video. The modified signal is passed to the screen 215 for display of the portion of the video represented by the signal.

The screen 215 may be the screen of a television, a mobile or smart phone, a tablet, laptop or other computer, a display device such as for so-called signage, etc. The VLC modulator 210 may be part of the same device as the screen or some other separate processing device. The video signal 205 could be received from a data storage of a device (e.g. a mobile phone or tablet or other computing device) in which the screen 215 is incorporated, or from some other source, such as a DVD or the like player, or a terrestrial, satellite or cable broadcast, etc.

The light 220 of the video that is produced by the screen 215 may be observable by one or more viewers. The light 220 is also received at a camera 225 to produce a captured video 230 comprising one or more frames. The captured video 230 is passed to a decoder 235, which analyses the captured video 230 to extract the information encoded therein by the VLC modulator 210.

Examples described herein determine a brightness level of one or more incoming frames of a video stream, and, in dependence upon the determined brightness level, select an amount of information to transmit as part of the video stream. These steps may be performed by the VLC modulator 210. The video frame may then be displayed on the screen 215 having the selected amount of information. Since in general the bit error is higher when the brightness level of a video frame is low (i.e. when a frame is darker) and when the amount of information is high, by varying the amount of information based on the brightness level, it is possible to keep the bit error rate below a certain level, whilst maximising the information content of the visible light communication in the video frame. The brightness level of a frame may be for example an average brightness of the frame. A number of measures for this are available.

In some examples, if the brightness level of a video frame is below a threshold, the VLC modulator 210 may determine that no visible light communication information is to be included in the frame of the image. The frame may then be passed unaltered to the screen 215 for display. On the other hand, if the brightness level of a video frame is above a certain threshold, the VLC modulator 210 may determine that a non-zero amount of information is to be included in the video frame. The VLC modulator 210 may alter the frame to include information, and send the altered frame to the screen 215 for display.

The amount of information encoded into a video frame may additionally or alternatively be varied continuously in dependence upon the brightness level of the video frame. The amount of information in a video frame may be higher if the brightness level of the video frame is higher. The amount of information in a video frame may, on the other hand, be lower if the brightness level of the video frame is lower. The amount of information encoded in a video frame may vary monotonically with the determined indication of the brightness level of the frames. A monotonic variation in this context may be understood to mean that the amount of information increases if the indication of the brightness level increases and, correspondingly, the amount of information decreases if the indication of the brightness level decreases.

In some examples, the indication of the brightness level of the light may be in the form of a histogram, which shows the number of pixels at each brightness level of the light. In some examples, the indication of the brightness level may be obtained from such a histogram. In some examples, the indication of the brightness level may be an average picture level (APL).

The APL may be understood to quantify the average brightness level of the pixels of a frame of a video signal. The APL may comprise a parameter indicating this brightness on a scale from a blank level to a white level. The present specification refers to the brightness level of a frame. This may be understood to be an indication of the (average) brightness of the light that is produced by the video signal when the frame is displayed on a screen.

Some of the following examples describe how the indication of the brightness level may be used to determine the tile size of a grid, which overlays a frame of a video stream, in which the tile size may be varied to change the amount of information encoded into the frame of the video stream. However, it will be appreciated that in other examples other methods may be used to convey data or information, using for example steganography techniques, and to vary the amount of data or information to be displayed on the screen. ("Steganography" is the hiding of a message within an ordinary message and the extraction of the message at its destination such that the hidden message is typically not normally observed. In the present context, this concept is used to convey information visually in a video sequence such that a viewer of the video sequence does not notice the information and can view the video sequence undisturbed.) Various methods for varying the amount of data in a frame will be straightforward for the skilled person to implement.

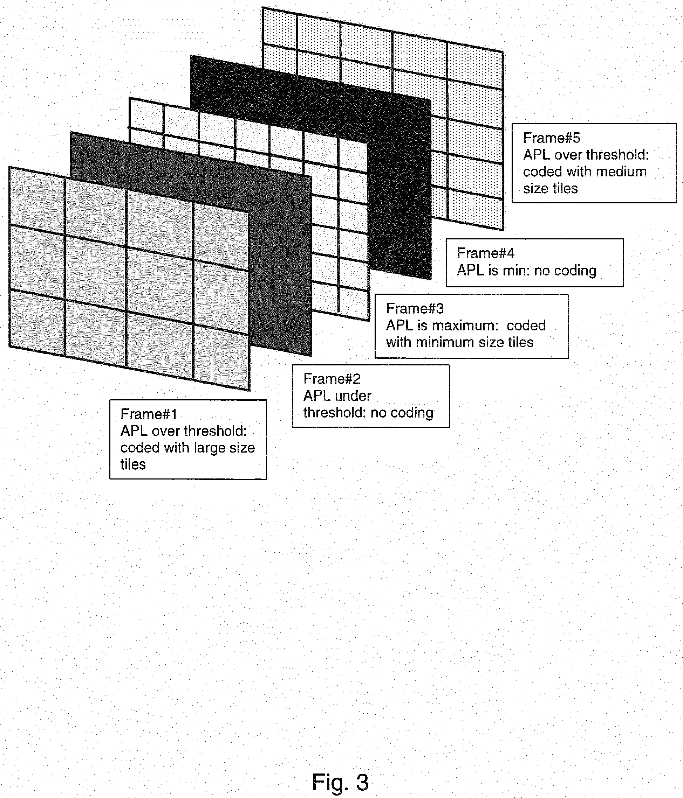

Reference is made to Fig. 3, which shows an example of how the amount of information encoded into a video frame may be varied with the brightness level of the video frame for different frames of a video sequence. In this case, the brightness level of the frame is shown as being indicated by the average picture level (APL), although other measures of the brightness level may be used in other examples. In this example, both the use of a threshold for determining whether to encode information in a frame and the continuing variation of the amount of information with the brightness level of the frame are employed. However, this may not be the case in all examples. In this example, the information is encoded into the frames using a grid and tile concept similar to the known technique described above with reference to Fig. 1, but modified as described herein.

For frame#1, the indication of the brightness level is above a threshold brightness level. In response to making this determination, the VLC modulator 210 is configured to modify the video signal of the frame to include a non-zero amount of information in a visible light communication. However, since the brightness level of the frame is relatively low, a grid having a small number of large tiles is overlaid on the frame.

For frame#2, the indication of the brightness level is below a threshold level. The VLC modulator 210 is configured, in response to making this determination, not to encode visible light communication information in the frame.

For frame#3, the indication of the brightness level is above a threshold level, and the VLC modulator 210 is configured to, in response to making this determination, modify the video signal to include a non-zero amount of information in a visible light communication. In this case, the brightness level of the frame is higher than the brightness level of frame#1, and therefore, in comparison to frame#1, a grid having a larger number of small tiles is overlaid on the frame. Thereby, the amount of information included in frame#3 is greater than the amount of information included in frame#1.

For frame#4, the indication of the brightness level is below a threshold level. The VLC modulator 210 is configured, in response to making this determination, again not to encode visible light communication information in the frame.

For frame#5, the indication brightness level is above a threshold, and the VLC modulator 210 is configured to, in response to making this determination, modify the video signal to include a non-zero amount of information in a visible light communication. In this case, the indication of the brightness level of the stream is higher than the indication of the brightness level of frame#1, and therefore, in comparison to frame#1, a grid having a larger number of small tiles is overlaid on the frame. Thereby, the amount of information included in frame#5 is greater than the amount of information included in frame#1. However, the indication of the brightness level of frame#5 is lower than the indication of the brightness level of frame#3, and therefore, in comparison to frame#3, a grid having a larger number of small tiles is overlaid on the frame. Thereby, the amount of information included in frame#5 is greater than the amount of information included in frame#1 though less than the amount of information included in frame#3.

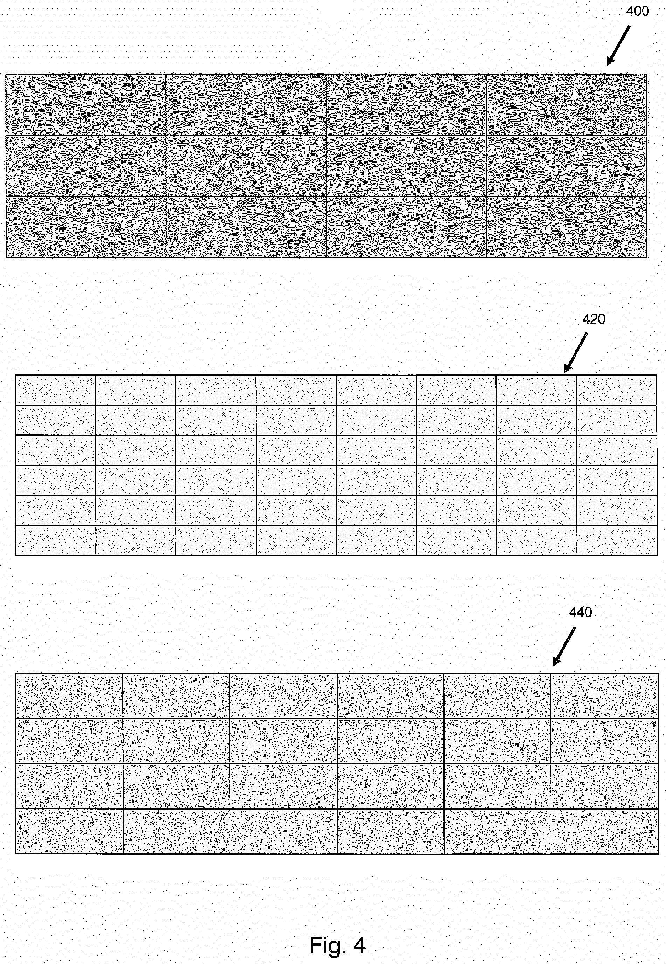

To illustrate this further, reference is made to Fig. 4 which shows three frames 400, 420, 440 of a video, which may be received in sequence. (The three "frames" 400, 420, 440 of Figure 4 may equivalently each be sets of sequential frames of a video sequence in which each frame within the set has the same or similar brightness level, that is, their brightness levels fall within the same thresholds.)

A first frame 400 is received at the VLC modulator 210, modified to add a number of tiles in a grid and the modified frame 400 is passed to the screen 215 for display. The next frame 420 received at the modulator 210 has a higher (brighter) brightness level. The modulator 210 is configured to, in response to detecting the increase in brightness level, increase the amount of information encoded into the frame 420, in this example by reducing the size of the tiles of the grid and increasing their number. The brightness level of the next frame 440 in the video is then lower. The modulator 210 is configured to, in response to detecting the lower brightness level, decrease the amount of information encoded into the frame 440 of the video by increasing the size of the tiles of the grid and decreasing their number. In this example, the brightness level of the third frame 440 is greater than the brightness level of the first frame 400, so the third frame 440 is modified to convey more information than the first frame 400, in this case by having a larger number of smaller tiles overlaid than is the case for the first frame 400.

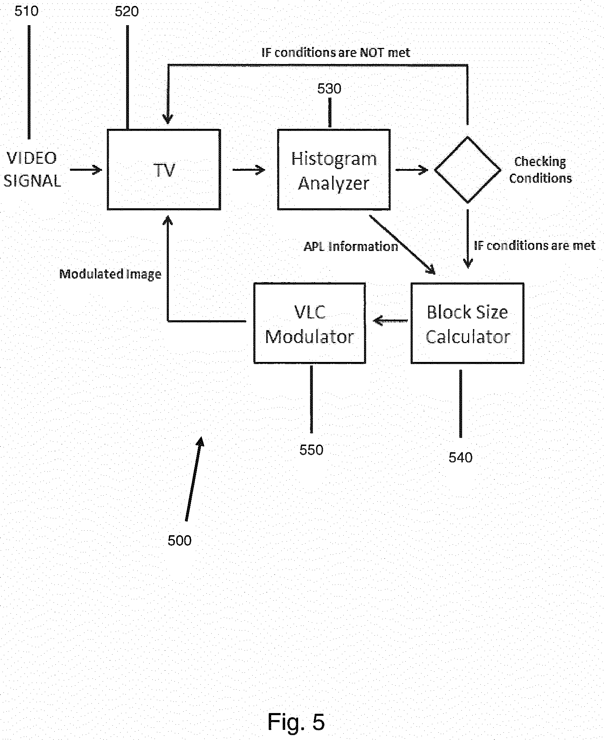

Reference is made to Fig. 5, which shows an example of system 500 for modifying frames of a video to convey information when the video is displayed by a display device 520, which may be any of the display devices mentioned above.. The video signal 510 is received and analysed by an analyser 530 for determining the brightness level of the video. The analyser 530 may comprise one or more memories and one or more processors. The analyser 530 may be part of the same display device 520 as the VLC modulator 550, e.g. the TV, signage, etc. This analyser 530 may be for example a histogram analyser 530, which is configured to generate a histogram of the intensities of the pixels in the frame, which indicates the brightness level or average brightness of one or more frames of the video.

The indication of the brightness level produced by the analyser 530 is then analysed to determine whether the conditions for including visible light communication information in the video are met, i.e. the indicated brightness level is above a threshold. If the conditions are not met, the frames of the video signal that are received are not modified to include visual light communication data. On the other hand, if the conditions are met, the process proceeds to determine the amount of information to be included in the one or more frames of the video based on the brightness level of the one or more frames in the video. This may involve passing an indication (e.g. APL) of brightness level of the one or more frames of the video to a block size calculator 540, which determines the size of the tiles in the grid. The block size calculator 540 is configured to make this determination, and then pass the determined tile size to the VLC modulator 550.

The VLC modulator 550 is configured to modulate one or more frames of the video signal to include the information for visual light communication into the frames in accordance with the indication of the amount of information passed to it.

Finally, the video is then displayed by the display device 520, the video having at least some frames that have been modulated to convey information in which the amount of information conveyed by a frame depends on the brightness of the frame.

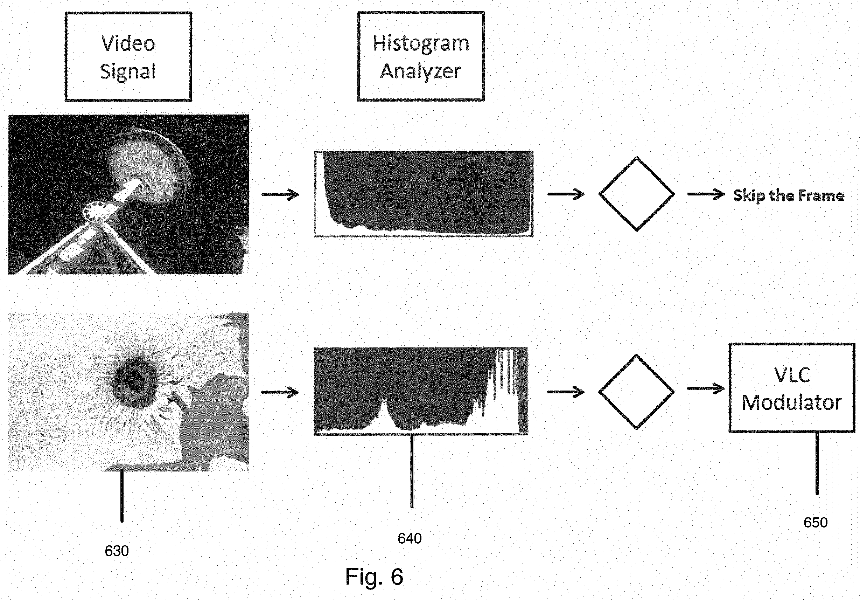

Reference is made to Fig. 6, which shows an example of two frames that may be analysed for the purposes of determining the amount of information to be included in the frame. A first frame 610 is shown, which is generally quite dark. The first frame 610 is then analysed to produce a histogram 620, indicating the number of pixels at each level of brightness, thus providing an overall indication of brightness level of the frame. The histogram is then analysed to determine whether or not the frame is to be modified to include visual light communication data. In the case of the frame 610, the brightness level is below a threshold, and so it is determined that no modification is to be performed.

A second frame 630 is shown, which is brighter than the first frame 610. The second frame 630 is then analysed to produce a histogram 640, indicating the number of pixels at each level of brightness, thus providing an overall indication of brightness level of the frame. The histogram is then analysed to determine whether or not the frame 630 is to be modified to include visual light communication data. In the case of the frame 630, the average brightness is above a threshold, and so it is determined that modification is to be performed to the frame 630. An indication that a modification is to be performed may be passed to the modulator 650, which may perform the modification of the frame 630 to include visual light communication data.

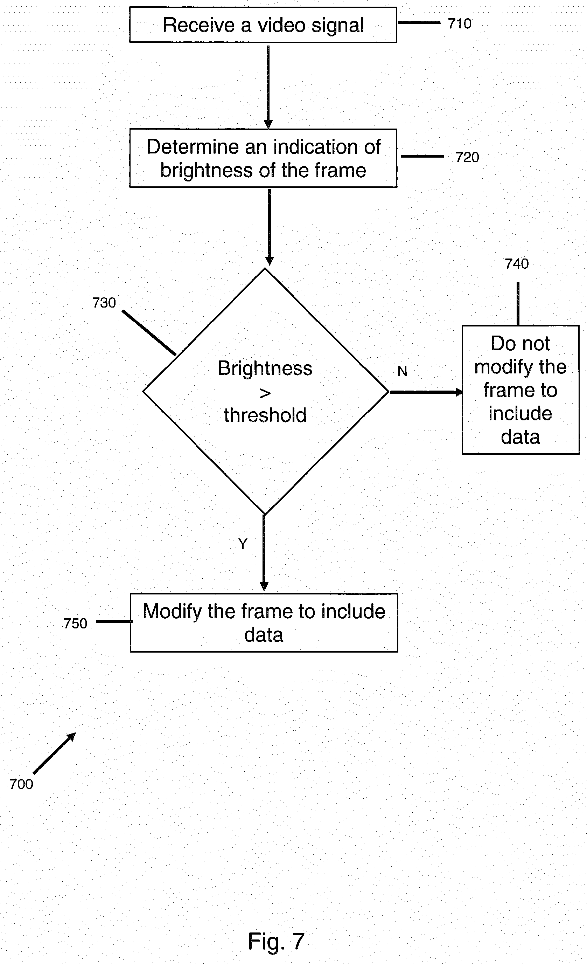

Reference is made to Fig. 7, which shows schematically an example of a method that may be performed according to examples described herein.

At step 710, a video signal is received by the system. The video signal comprises at least one frame.

At step 720, the system determines an indication of brightness level of the at least one frame. This indication may comprise an APL, a histogram or some other indicator.

At step 730, the system is configured to determine whether or not the determined indication of the brightness level of the at least one frame is greater than a threshold. If this is not the case, the method 700 proceeds to step 740 at which the at least frame is not modified to include data. Instead the at least one frame is displayed on the screen. If the indication of the brightness level of the at least one frame is greater than a threshold, the method proceeds to step 750.

At step 750, the at least one frame is modified to include light communication data. The amount of light communication data included in the at least one frame may be determined in dependence upon the indication of the brightness level of the at least one frame.

The description above refers to a VLC modulator. This VLC modulator may comprise one or more processors, one or more memories, etc. The VLC modulator may incorporated in a device. This device may also comprise the analyser for determining an indication of the brightness level of the light of at least one frame. This analyser may be provided by the one or more processors and one or more memories that provide the VLC modulator. Alternatively, the analyser may be provided by a different processor and memory.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method for encoding visible light communication information in a video formed of a sequence of frames, the method comprising:
analysing frames of the video to determine an indication of a brightness level of the frames;
selecting for the analysed frames an amount of information to encode for visible light communication in the respective frames in dependence upon the determined indication of brightness level in the respective frames; and
encoding the selected amount of information for visible light communication in the respective frames.

2. A method according to claim 1, comprising:
in response to determining that the brightness level of a frame is below a threshold, not encoding any information for visible light communication in the frame.

3. A method according to claim 1 or claim 2, comprising:
in response to determining that the brightness level of a frame is above a threshold, encoding information for visible light communication in the frame.

4. A method according to any of claims 1 to 3, wherein the selected amount of information to encode for visible light communication in the frames varies monotonically with the determined indication of the brightness level of the frames.

5. A method according to any of claims 1 to 4, wherein the information is encoded by varying a property of tiles of a grid shown in one or more frames of the video.

6. A method according to claim 5, wherein the property comprises transparency of the tiles.

7. A method according to claim 5 or claim 6, wherein selecting an amount of information to encode for visible light communication comprises selecting a number of tiles for display on the grid.

8. A method according to claim 7, wherein the number of tiles for display on the grid varies monotonically with the determined indication of the brightness level.

9. A method according to any of claims 1 to 8, wherein the determining the indication of the brightness level comprises determining a histogram of brightness levels of the frames of the video.

10. A method according to any of claims 1 to 9, wherein the determined indication of the brightness level comprises an average picture level of the at least one frame of the video.

11. A method according to any of claims 1 to 10, wherein analysing a frame of the video is carried out prior to the display of the frame.

12. A system for encoding visible light communication information in a video formed of a sequence of frames, the system comprising at least one processor and at least one memory including computer program code, the at least one memory and the computer program code configured to, with the at least one processor, cause the system at least to:
analyse frames of the video to determine an indication of a brightness level of the frames;
select for the analysed frames an amount of information to encode for visible light communication in the frames in dependence upon the determined indication of brightness level in the respective frames; and
encode the selected amount of information for visible light communication in the frames.

13. A computer program for encoding visible light communication information in a video, the computer program comprising instructions such that when the computer program is executed on a computing device, the computing device is arranged to:
select for the analysed frames an amount of information to encode for visible light communication in the frames in dependence upon the determined indication of brightness level in the respective frames; and
encode the selected amount of information for visible light communication in the frames.
